# EUROPÄISCHE PATENTANMELDUNG

(11) **EP 1 009 083 A2**
(43) Veröffentlichungstag der Anmeldung: **14.06.2000**
(21) Anmeldenummer: 99124423.7
(22) Anmeldetag: 07.12.1999
(51) Int. Cl.: H02G 15/184, H02G 15/103

(54) **Kabelgarnitur zum Schutz einer Kabelverbindung in der Mittelspannungstechnik**

(30) Priorität: 11.12.1998 DE 19857334
(71) Anmelder: RXS Kabelgarnituren GmbH, 58029 Hagen (DE)
(72) Erfinder: Guzowski, Bernd, 58285 Gevelsberg (DE)
(74) Vertreter: Zedlitz, Peter, Dipl.-Inf.

(57) **Zusammenfassung**

Bei der Erfindung handelt es sich um eine Kabelgarnitur (KERF) zum Schutz einer Kabelverbindung in der Mittelspannungstechnik. Die Kabelgarnitur (KERF) besteht aus einem schrumpfbaren inneren Isolationsschlauch (IIS) mit einem feldsteuernden Element (FEB, FEBU) als Beschichtung, einem schrumpfbaren äußeren Schutzschlauch (AIS) und einem die Anordnung völlig überdeckenden, schrumpfbaren Schutzschlauch (SS).

## Beschreibung

Die Erfindung betrifft eine Kabelgarnitur zum Schutz einer Kabelverbindung in der Mittelspannungstechnik, bei der die freigelegten Kabelleiter mit einem leitenden Verbindungselement verbunden sind, wobei über der Verbindungsstelle von innen nach außen übereinander liegend ein die abgesetzten Enden der Kabelleitschichten erfassendes feldsteuerndes Element, ein schrumpfbarer innerer Isolationsschlauch, ein schrumpfbarer äußerer Isolationsschlauch, eine Leitschicht und die Anordnung völlig überdeckend ein schrumpfbarer Schutzschlauch angeordnet sind.

Allgemein bekannt sind Verbindungsmuffen für eine Verbindung von zwei Kabeln im Mittelspannungsbereich, wobei die zu verbindenden Leiter jeweils mit einem Preß- oder Schraubverbinder kontaktiert und mit Mitteln zur Steuerung des elektrischen Feldes überdeckt sind. Darüber sind schrumpfbare Isolationsschläuche angeordnet. Eine derartige Anordnung ist aus DE 29 37 253 - C2 bekannt. Dort erfolgt die elektrische Feldsteuerung mit Hilfe eines wärmeschrumpfenden Feldsteuerschlauches. Der Außendurchmesser dieses Feldsteuerungsschlauches ist kleiner als der Innenduchmesser des darüber anzuordnenden schrumpfbaren Isolationsschlauches. Der Feldsteuerschlauch überlappt dabei die äußere Leitschicht eines jeden Kabels und ist in seinem Verlauf über die Verbindungsstelle hinweg nicht unterbrochen. Die über dem Feldsteuerschlauch anzuordnenden wärmeschrumpfbaren Isolierschläuche werden zunächst ineinander angeordnet und jeweils nacheinander auf den bereits aufgeschrumpften Feldsteuerschlauch aufgeschrumpft. Um Verwechslungen bei den einzelnen Schläuchen zu vermeiden, müssen diese entsprechend gekennzeichnet werden oder andere Maßnahmen getroffen werden, wie zum Beispiel voneinander verschiedene Durchmesser. Dies erfordert erheblichen Herstellungs-, Montage- und Zeitaufwand. So werden zum Beispiel die Feldsteuerschläuche bei der Herstellung im Außendurchmesser immer kleiner produziert als die darüber anzuordnenden Isolationsschläuche. Auf diese Weise ist es dann möglich, durch diese Vorkonfektion eine fehlerhafte Montage auszuschließen. Die geometrische Schlauchanpassung und die Konfektionierung ist jedoch produktionstechnisch aufwendig. Durch die verschiedenen Durchmesser der einzelnen Schläuche muß unter Umständen eine Einschränkung bezüglich des Schrumpfbereiches in Kauf genommen werden, da der äußerste Schlauch wesentlich stärker geschrumpft werden muß als der innen liegende Schlauch. Außerdem ist von Nachteil, daß bei dem Einsatz von derartigen Schläuchen an den Übergangsstellen gegebenenfalls Hohlräume gebildet werden, die zu einer Teilentladung zum Beispiel an den äußeren Leitschichtkanten der Kabel führen können. Um derartige Probleme zu lösen, wurde bisher an diesen Stellen ein zusätzliches Band eingesetzt, welches vorzugsweise ebenfalls feldsteuernde Eigenschaften aufweist. Es werden auch elektrisch leitende Lacke eingesetzt, mit denen die Hohlräume ausgefüllt werden, um an den beschriebenen Stellen ein definiertes elektrisches Potential zu erzwingen und damit Teilentladungen zu verhindern.

Weiterhin ist aus EP 0 681 010 - A2 ein Verfahren zur Herstellung eines Feldsteuerungsbelages für Mittelspannungsgarnituren bekannt. Bei diesem Feldsteuerungsbelag handelt es sich um ein Flüssigpolymer mit leitfähigen Zusätzen aus gekörntem Siliciumcarbid. Die Mischungsrezeptur enthält ein halogenfreies Lösungsmittel, das nach dem Auftrag auf die Mittelspannungsgarnitur abdunstet. Derartige feldsteuernde Dichtmassen erfüllen alle geforderten Kriterien für Feldsteuerungsbeläge bei Mittelspannungsgarnituren. Außerdem sind darin verschiedene Ausführungsbeispiele für Feldsteuerungsbeläge aufgeführt, die den Umweltbedingungen bezüglich Lösungsmittel genügen, wobei die geforderten elektrischen Bedingungen eingehalten werden.

Der Erfindung liegt die Aufgabe zugrunde, eine Kabelgarnitur zum Schutz einer Kabelverbindung in der Mittelspannungstechnik zu konzipieren, bei der die Probleme der elektrischen Feldsteuerung in Verbindung mit einer geeigneten Isolationsherstellung in einfacher und zeitsparender Weise gelöst werden, wobei insbesondere die Teilentladungsintensität durch Vermeidung von Hohlräumen im Verbindungsbereich möglichst klein zu halten ist bzw. Teilentladungen von vornherein vermieden werden. Außerdem ist Aufgabe der Erfindung, mit Hilfe der Kabelgarnitur die Montage zu erleichtern und die Produktherstellung zu verbessern. Die gestellte Aufgabe wird mit einer Kabelgarnitur der eingangs erläuterten Art dadurch gelöst, daß das feldsteuernde Element als Beschichtung auf der Innenfläche des schrumpfbaren inneren Isolationsschlauches angeordnet ist und daß das feldsteuernde Element zumindest während der Montage verformbar ist.

Ein klarer Vorteil an der Kabelgarnitur gemäß der Erfindung liegt bereits darin, daß bei der Gesamtanordnung ein separater Schlauch, früher der separate Feldsteuerungsschlauch, entfällt. Dies bedeutet, daß bei der Montage Arbeitsschritte eingespart werden, nämlich die Anordnung und der Schrumpfvorgang eines separaten Feldsteuerungsschlauches. Weiterhin ist von Vorteil, daß bei der Durchmesseranpassung ein Schlauch weniger ist, so daß die Durchmesserabstufung der übereinander zu schrumpfenden Schläuche besser gestaltet werden kann. Dies führt dazu, daß ein größerer Bereich von Kabeldurchmessern mit einer Type von Kabelgarnituren erfaßt werden kann. Weiterhin wird durch die Verformbarkeit des als Beschichtung aufgebrachten feldsteuernden Elementes die Neigung zur Hohlraumbildung vermieden, so daß Teilentladungen nicht mehr möglich sind. So wird beispielsweise als feldsteuerndes Element ein Feldsteuerbelag bzw. eine Feldsteuerungsmasse, die vorzugsweise kein halogenhaltiges Lösungsmittel enthalten, auf die Innenfläche des inneren Isolationsschlauches als Beschichtung aufgebracht. Dabei muß die Beschichtung des halbleitenden feldsteuernden Elementes die Verbindungsstelle der beiden Kabel so weit überdecken, daß nach der Montage das feldsteuernde Element mit den äußeren Leitschichten beider Kabel in Berührung steht.

Das feldsteuernde Element enthält beispielsweise ein bei Raumtemperatur zähflüssiges, stark klebriges Polymer, ein bei Raumtemperatur leicht flüchtiges Lösungsmittel, einen elektrisch leitfähigen Zusatz aus gekörntem Siliciumcarbonat, verschiedene, der Weichmachung dienende Additive und Antioxidantien, wobei das Lösungsmittel halogenfrei ist und eine auf Ester bezogene Verdunstungszahl von < 10 aufweist. Als Polymer eignet sich beispielsweise Ethylen-Propylen-Dien-Terpolymer (EPDM). Als Lösungsmittel können eingesetzt werden zum Beispiel: Isopropanol, 2-Butanon, Ethylacetat, Petroleumbenzin 60-80, n-Hexan, Cyclohexan u.a. Als Zusatzadditive kommen zum Beispiel chlorierte aliphatische Kohlenwasserstoffe, chlorierte cycloaliphatische Verbindungen in Frage. Als Antioxidantien werden handelsübliche phenolische und/oder aminische Verbindungen zugesetzt.

Solche feldsteuernden Elemente sind im allgemeinen durchgehend als Beschichtung aufgebracht, doch ist eine ringförmige Unterbrechung im Bereich des Preß- oder Schraubverbinders möglich. Die Materialien der aufgebrachten Isolationsschläuche weisen kriechstrom- und erosionsfeste Eigenschaften auf, wobei der spezifische Durchgangs-Widerstand ≥ 10¹⁰ vorzugsweise 10¹² Ω cm beträgt. Die Isolationsschläuche können als Endlosschlauch geliefert werden, so daß die jeweils erforderliche Länge am Montageort abgeschnitten werden kann. Im allgemeinen ist es jedoch zweckmäßig, bereits geschnittene Expandate, das heißt expandierte, schrumpffähige Isolationsschläuche herzustellen, in die dann werksseitig das feldsteuernde Element als Beschichtung eingebracht wird. Die Schichtdicke des feldsteuernden Elements beträgt mindestens 1 mm, vorzugsweise 2 mm. Nach der Abtrocknung, d.h. nach Verdunstung des vorzugsweise halogenfreien Lösungsmittels wird ein Montageschutz in Form einer Folie, vorzugsweise ein Silikonpapier aufgebracht. Der Montageschutz kann auch als rohrförmiger Schutz eingeschoben werden. Das als Beschichtung aufgebrachte feldsteuernde Element behindert die Schrumpfung des tragenden inneren Isolationsschlauches nicht und da dieses feldsteuernde Element nicht geschrumpft werden muß, ist insgesamt der Wärmebedarf während des Schrumpfvorganges geringer, da nur ein Schrumpfschlauch zu schrumpfen ist. Bisher waren hierfür zwei Montageschritte nötig. Weiterhin ist von Vorteil, daß eine Verwechslung des bisher üblichen Feldsteuerungsschlauches mit einem der schrumpfenden Isolationsschläuche unmöglich ist. Wie bereits angedeutet, müssen nun für die Konfektion der Kabelgarnitur nurmehr zwei Schläuche ineinandergeschoben werden, so daß sich die Durchmesserabstände verringern können. Dadurch ist der Erfassungsbereich einer Kabelgarnitur gemäß der Erfindung bezüglich des Schrumpfverhaltens wesentlich größer, da das Schrumpfvermögen der einzelnen Schläuche enger aufeinander abgestimmt werden kann. Das als Beschichtung auf die Innenfläche des inneren Isolationsschlauches aufgebrachte feldsteuernde Element wird beim Schrumpfen durch den mechanischen Andruck des darüber liegenden inneren Isolationsschlauches an die Kabelgeometrie besser angedrückt, so daß die beschriebenen Hohlräume voll ausgefüllt werden. Dadurch kann auf die Verwendung eines bisher üblichen Feldsteuerbandes bzw. eines Leitlackes zumindest im Bereich der äußeren Kabelleitschichtkante verzichtet werden.

Der Erfassungsbereich einer Kabelgarnitur gemäß der Erfindung überdeckt nun beispielsweise Kabelquerschnittsbereiche von 95 mm² bis 240 mm² bzw. 70 - 150 mm² bei einer 20 kV - Mittelspannungsgarnitur.

Die noch gemessenen Teilentladungen betragen bei der Kabelgarnitur gemäß der Erfindung nun nur noch ≤ 5 pc (Picocoulomb).

Im übrigen werden auch alle für eine Kabelgarnitur im Mittelspannungsbereich erforderlichen Prüfanforderungen eingehalten.

Die Erfindung wird nun anhand von sieben Figuren näher erläutert.
- Figur 1: zeigt ein zu verbindendes Ende eines Mittelspannungskabels.
- Figur 2: zeigt eine Kabelgarnitur nach dem Stand der Technik.
- Figur 3: zeigt eine Kabelgarnitur gemäß der Erfindung.
- Figur 4: zeigt einen inneren Isolationsschlauch mit einem als durchgehende Beschichtung aufgebrachten feldsteuernden Element.
- Figur 5: zeigt einen inneren Isolationsschlauch mit einem als unterbrochene Beschichtung aufgebrachten feldsteuernden Element.
- Figur 6: zeigt eine konfektionierte Kabelgarnitur vor der Montage nach dem herkömmlichen Stand der Technik.
- Figur 7: zeigt eine konfektionierte Kabelgarnitur gemäß der Erfindung vor der Montage.

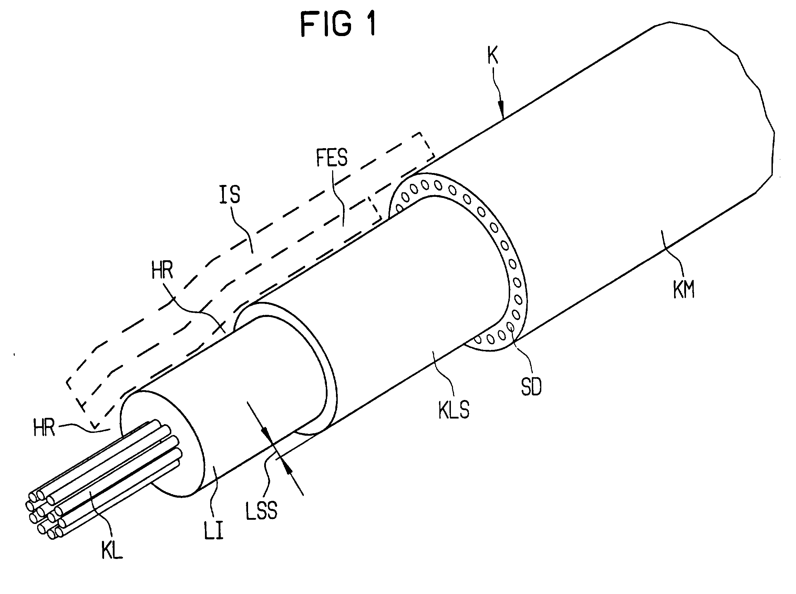

In Figur 1 ist das Ende eines Mittelspannungskabels K dargestellt, wobei bereits die einzelnen Schichten für die bevorstehende Verbindung abgesetzt sind. So ist daraus der umhüllende Kabelmantel KM zu erkennen, in dem Schirmdrähte SD eingelagert sind. Unter diesem Kabelmantel KM ist eine elektrisch leitende Kabelleitschicht KLS angeordnet, die in der erforderlichen Länge freigelegt und abgesetzt ist. Diese Kabelleitschicht KLS weist eine Schichtdicke LSS von ca. 1 mm auf. Darunter ist wiederum in der entsprechenden Länge abgesetzt die Leiterisolation LE. Schließlich sind die zu verbindenden elektrischen Kabelleiter KL freigelegt, die auf Stoß zum zweiten Kabelende gebracht werden und mit einem Verbindungselement leitend miteinander verbunden werden. In dieser Figur ist nun weiterhin die Problematik bezüglich entstehender Hohlräume HR aufgezeigt, die sich ergibt, wenn ein schrumpfbarer Feldsteuerungsschlauch FES über die abgesetzten Teilbereiche des Kabels K aufgeschrumpft wird. Nachdem dieser Feldsteuerungsschlauch FES aufgebracht ist, wird nach bisheriger Technik zumindest ein innerer Isolationsschlauch IS aufgeschrumpft.

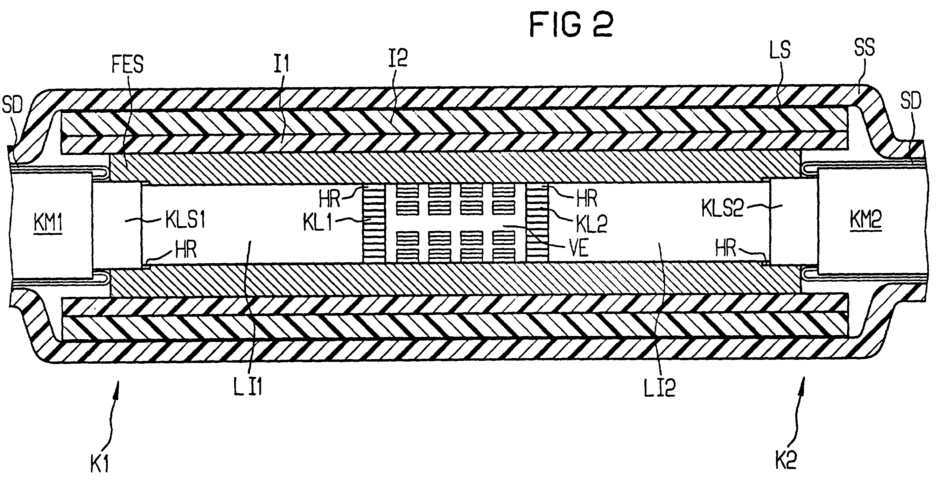

Die Figur 2 zeigt ein Ausführungsbeispiel einer Kabelgarnitur für Mittelspannungstechnik nach dem Stand der Technik. So ist daraus erkennbar, daß die beiden Kabelenden der zu verbindenden Kabel K1 und K2 entsprechend ihrer übereinander liegenden Schichten stufenweise abgesetzt sind. Dabei sind die einzelnen Schichten:
Kabelmantel KM1 bzw. KM2,
Kabelleitschicht KLS1 bzw. KLS2,
Leiterisolierung LI1 bzw. LI2,
Kabelleiter KL1 bzw. KL2.

Die beiden Kabelleiter KL1 und KL2 werden mit Hilfe eines leitenden Verbindungselementes VE miteinander leitend verbunden. Über diesem Absetzungsbereich ist nun gemäß des Standes der Technik ein schrumpfbarer Feldsteuerungsschlauch FES aufgeschrumpft, wobei an den Übergängen der einzelnen Kabelschichten sich Hohlräume HR ausbilden können, die zu Teilentladungen führen können. Über diesem aufgeschrumpften Feldsteuerungsschlauch FES ist ein innerer Isolationsschlauch I1 aufgeschrumpft, über den ein weiterer Isolationsschlauch I2 mit einer Leitschicht LS ebenfalls aufgeschrumpft ist. Über diese ganze Einheit wird ein Schutzschlauch SS geschrumpft. Wenn die Kabelenden im Kabelmantel zusätzlich noch Schirmdrähte SD enthalten, so werden diese über den Kabelmantel zurückgeschlagen und in entsprechender, an sich bekannter Weise kontaktiert und gegebenenfalls wird diese Anordnung dann ebenfalls in dem Schutzschlauch SS mit integriert. Diese an sich bekannte Anordnung ist hier nicht ausdrücklich aufgezeigt.

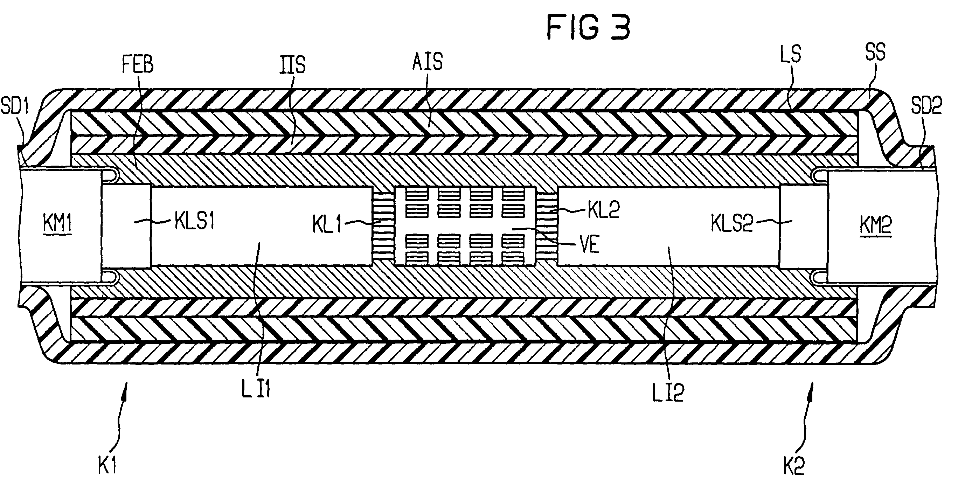

In Figur 3 wird die neue Ausführungsform gemäß der Erfindung gezeigt, wobei die beiden Enden der zu verbindenden Kabel K1 und K2 entsprechend ihrer übereinander liegenden Schichten in der gleichen Weise abgesetzt sind wie bei dem Ausführungsbeispiel nach Figur 2. Unterschiedlich zum Stand der Technik ist jedoch, daß hier das feldsteuernde Element FEB als Beschichtung auf der Innenfläche des schrumpfbaren inneren Isolationsschlauches IIS aufgebracht ist. Das als Beschichtung aufgebrachte feldsteuernde Element FEB selbst ist nicht mehr schrumpffähig, doch behindert es die Schrumpfung des inneren Isolationsschlauches IIS nicht. Das feldsteuernde Element FEB ist jedoch zumindest während des Schrumpfvorganges verformbar, so daß es infolge der Schrumpfkräfte des inneren Isolationsschlauches IIS an die einzelnen Schichten der Enden der Kabel K1 und K2 angepreßt werden kann, wobei nun keine Hohlräume mehr entstehen können. Damit ist die Gefahr von Teilentladungen weitestgehend wenn
nicht sogar insgesamt behoben. Außerdem ist bei der Montage besonders vorteilhaft, daß beim Aufbringen dieses mit dem feldsteuernden Element FEB beschichteten Isolationsschlauches IIS nur noch ein Schrumpfvorgang ausgeführt werden muß. Über diese Anordnung hinweg wird nun aus Isolationsgründen der schrumpfbare äußere Isolationsschlauch AIS mit einer Leitschicht LS aufgeschrumpft. Darüber erstreckt sich dann schließlich der geschrumpfte Schutzschlauch SS. Auch hier ist lediglich angedeutet, daß in den Kabelmänteln KM1 bzw. KM2 Schirmdrähte SD1 bzw. SD2 angeordnet sein können, die dann in herkömmlicher Weise kontaktiert werden. Diese beiden Kontaktierungsanordnungen können dann gegebenenfalls ebenso mit dem Schutzschlauch SS überdeckt werden, was an sich bekannt ist. Von Vorteil ist also, daß das feldsteuernde Element FEB selbst nicht mehr schrumpfbar ist und mit dem darüber liegenden schrumpfbaren, inneren Isolationsschlauch IIS eine einzige Einheit bildet. Damit entfällt wie bereits oben erwähnt auch ein Schrumpfvorgang bei der Montage.

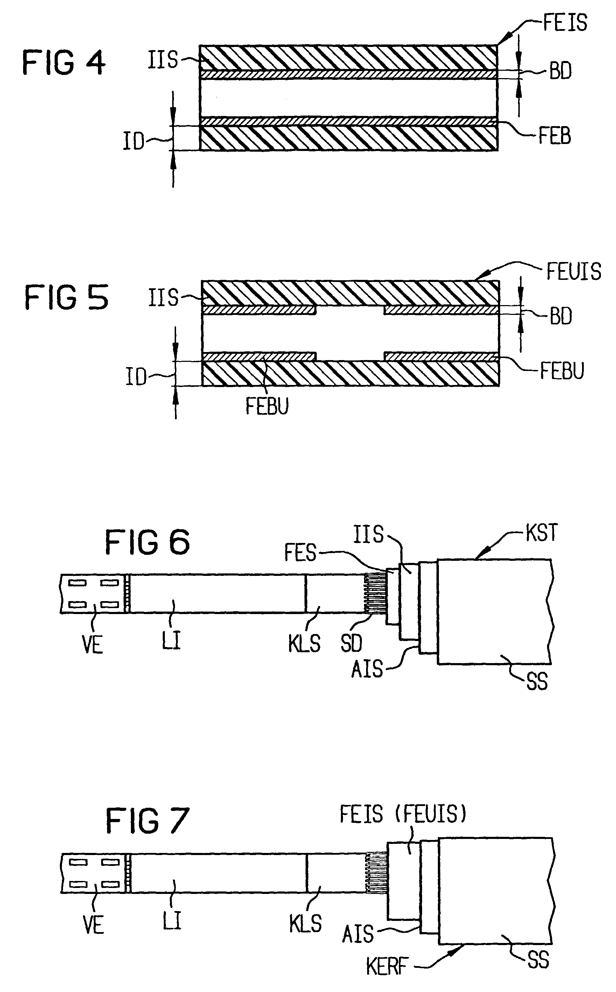

In Figur 4 ist ein Ausführungsbeispiel für einen kombinierten inneren Isolationsschlauch FEIS dargestellt, wie er in der Kabelgarnitur gemäß der Erfindung eingesetzt wird. Dabei handelt es sich um einen schrumpfbaren inneren Isolationsschlauch IIS mit einer Stärke ID von 0,5 bis 6 mm, vorzugsweise von 1 bis 5 mm, und ein auf der Innenfläche durchgehend als Beschichtung aufgebrachtes feldsteuerndes Element FEB mit einer Stärke BD von mindestens 1 mm, vorzugsweise von 2,0 mm,jeweils im ungeschrumpften, aufgeweiteten Zustand des Isolationsschlauchs IIS.

In Figur 5 wird ein kombinierter innerer Schutzschlauch FEUIS gezeigt, bei dem wiederum ein schrumpfbarer innerer Isolationsschlauch IIS verwendet wird, bei dem aber das als Beschichtung aufgebrachte feldsteuernde Element FEBU im Mittelbereich, der später über dem Verbindungselement zu liegen kommt, ringförmig unterbrochen ist. Es gelten hier die gleichen Angaben für die Schichtdicken wie in Figur 4.

In Figur 6 wird eine vorkonfektionierte Kabelgarnitur dargestellt, wobei sie bereits über ein Ende der zu verbindenden Kabel seitlich aufgeschoben ist. Die Darstellung in Figur 6 entspricht dem Stand der Technik, bei dem als feldsteuerndes Element ein separater, schrumpfbarer Feldsteuerungsschlauch FES eingesetzt wird. Über diesem Feldsteuerschlauch FES ist dann ein innerer Isolationsschlauch IIS, darüber ein äußerer Isolationsschlauch AIS und darüber der Schutzschlauch SS angeordnet. Bei dieser Kabelgarnitur KSD nach dem Stand der Technik sind alle vier Schläuche zunächst lose ineinandergeschoben und werden von innen heraus nacheinander über der Verbindungsstelle der Kabel durch Schrumpfen aufgebracht. Dies bedeutet, daß in diesem Fall vier Schrumpfvorgänge nacheinander durchgeführt werden müssen.

In Figur 7 wird dagegen die vorkonfektionierte Kabelgarnitur KERF gemäß der Erfindung dargestellt, und es geht daraus hervor, daß in diesem Fall nur noch drei Schläuche ineinander angeordnet sind. Der erste schrumpfbare Schlauch FEIS setzt sich dabei gemäß der Erfindung aus dem als Beschichtung aufgebrachten feldsteuernden Element und dem inneren Isolationsschlauch IS zusammen. Darüber aufgeschoben ist der äußere Isolationsschlauch AIS und schließlich der äußere Schutzschlauch SS. Somit sind hier nur noch drei Schläuche ineinander geschoben, die wie vorher einzeln über der Verbindungsstelle aufgeschumpft werden. Gemäß der Erfindung sind somit jetzt nur noch drei Schrumpfvorgänge nötig. Bei dem mit dem feldsteuernden Element beschichteten inneren Isolationsschlauch IIS kann das feldsteuernde Element in durchgehender Form (FEIS) nach Figur 4 oder in unterbrochener Form (FEUIS) nach Figur 5 aufgebracht werden.

Weiterhin kann bei der Ausführungsform gemäß der Erfindung eine weitere Zusammenfassung von Schläuchen, z.B. die Zusammenfassung des äußeren Isolationsschlauches AIS mit dem darüberliegenden Schutzschlauch SS vorgenommen werden. Dadurch verringern sich die Montageschritte wie auch die Schrumpfvorgänge weiter. Eine Zusammenfassung kann beispielsweise auch zwischen dem inneren Isolationsschlauch und dem äußeren Isolationsschlauch erfolgen.

## Patentansprüche

1. Kabelgarnitur zum Schutz einer Kabelverbindung in der Mittelspannungstechnik, bei der die freigelegten Kabelleiter mit einem leitenden Verbindungselement verbunden sind, wobei über der Verbindungsstelle von innen nach außen übereinander liegend ein die abgesetzten Enden der Kabelleitschichten erfassendes feldsteuerndes Element, ein schrumpfbarer innerer Isolationsschlauch, ein schrumpfbarer äußerer Isolationsschlauch, eine Leitschicht und die Anordnung völlig überdeckend ein schrumpfbarer Schutzschlauch angeordnet sind,
**dadurch gekennzeichnet,**
daß das feldsteuernde Element (FEB, FEBU) als Beschichtung auf der Innenfläche des schrumpfbaren inneren Isolationsschlauches (IIS) angeordnet ist und daß das feldsteuernde Element (FEB, FEBU) zumindest während der Montage verformbar ist.

2. Kabelgarnitur nach Anspruch 1,
**dadurch gekennzeichnet,**
daß das feldsteuernde Element (FEB) auf der gesamten Innenfläche des schrumpfbaren inneren Isolationsschlauches (IIS) zumindest bis zur Erfassung der beiden abgesetzten Enden der Kabelleitschichten (KLS, KLS1, KLS2) angeordnet ist.

3. Kabelgarnitur nach Anspruch 1,
**dadurch gekennzeichnet,**
daß das als Beschichtung aufgebrachte feldsteuernde Element (FEBU) im Bereich des Verbindungselementes (VE) ringförmig unterbrochen ist.

4. Kabelgarnitur nach einem der vorhergehenden Ansprüche,
**dadurch gekennzeichnet,**
daß die Isolationsschläuche (IIS, AIS) kriechstromfeste Werte, bzw. einen spezifischen Durchgangswiderstand von mindestens 10¹⁰, vorzugsweise 10¹² Ωcm aufweisen.

5. Kabelgarnitur nach einem der vorhergehenden Ansprüche,
**dadurch gekennzeichnet,**
daß das feldsteuernde Element (FEB, FEBU) aus einem bei Raumtemperatur zähflüssigen, stark klebrigen Polymer, einem bei Raumtemperatur leicht flüchtigen Lösungsmittel, einem elektrisch leitfähigen Zusatz aus gekörntem Siliciumcarbonat, verschiedenen, der Weichmachung dienenden Additiven und Antioxidantien besteht, wobei das Lösungsmittel halogenfrei ist und eine auf Ester bezogene Verdunstungszahl von < 10 aufweist.

6. Kabelgarnitur nach einem der vorhergehenden Ansprüche,
**dadurch gekennzeichnet,**
daß die Stärke (ID) des inneren Isolationsschlauches (IIS) im ungeschrumpften aufgeweiteten Zustand 0,5 bis 6 mm, vorzugsweise 1 bis 5 mm, beträgt.

7. Kabelgarnitur nach einem der vorhergehenden Ansprüche,
**dadurch gekennzeichnet,**
daß die Stärke des als Beschichtung aufgebrachten feldsteuernden Elementes (FEB, FEBU) im ungeschrumpften Zustand des Isolationsschlauches (IIS) mindestens 1 mm, vorzugsweise 2,0 mm, trägt.

8. Kabelgarnitur nach einem der vorhergehenden Ansprüche,
**dadurch gekennzeichnet,**
daß die Schrumpffähigkeit der Isolationsschläuche (IIS, AIS) z.B. einer 20 kV-Kabelgarnitur einen Kabelquerschnittsbereich von 95 mm² bis 240 mm² bzw. 70 mm² bis 150 mm² umfaßt.

9. Kabelgarnitur nach einem der vorhergehenden Ansprüche,
**dadurch gekennzeichnet,**
daß elektrische Teilentladungen im Bereich der Verbindungsstelle ≤ 5 pc (picocoulomb) betragen.
